# EUROPÄISCHE PATENTSCHRIFT

(11) **EP 3 219 235 B1**
(45) Veröffentlichungstag und Bekanntmachung des Hinweises auf die Patenterteilung: **29.12.2021**
(21) Anmeldenummer: 16160966.4
(22) Anmeldetag: 17.03.2016
(51) Int. Cl.: A47L 9/14, B29C 65/08, B29C 65/00, B29L 31/00

(54) **VORRICHTUNG FÜR EINEN STAUBSAUGERFILTERBEUTEL MIT EINER HALTEVORRICHTUNG UND EINER VERSCHLUSSVORRICHTUNG**
DEVICE FOR A VACUUM CLEANER FILTER BAG COMPRISING A HOLDING DEVICE AND A CLOSURE DEVICE
DISPOSITIF POUR UN SAC FILTRANT D'ASPIRATEUR AVEC DISPOSITIF DE MAINTIEN ET DISPOSITIF DE VERROUILLAGE

(43) Veröffentlichungstag der Anmeldung: 20.09.2017
(73) Patentinhaber: Eurofilters Holding N.V., 3900 Overpelt (BE)
(72) Erfinder: Sauer, Ralf, 3900 Overpelt (BE); Schultink, Jan, 3900 Overpelt (BE)
(74) Vertreter: Grünecker Patent- und Rechtsanwälte PartG mbB

(56) Entgegenhaltungen:
- WO-A1-03/073903
- DE-A1- 19 948 909
- DE-U1- 29 615 163
- None

## Beschreibung

### Gebiet der Erfindung

Die Erfindung betrifft eine Vorrichtung mit einer Haltevorrichtung und einer Verschlussvorrichtung für einen Staubsaugerfilterbeutel.

### Hintergrund der Erfindung

Bei Staubsaugern werden zum Filtern der angesaugten Luft häufig Staubsaugerfilterbeutel verwendet. Diese Staubsaugerfilterbeutel umfassen eine Beutelwand aus einem Filtermaterial, beispielsweise einem Vliesstoff, welches die in der angesaugten Luft enthaltenen Staub- und Schmutzpartikel ausfiltert, sowie eine an der Beutelwand befestigte Halteplatte zum Positionieren des Staubsaugerfilterbeutels im Staubsauger. Geräteseitig ist der Halteplatte im Filterbeutelaufnahmeraum des Staubsaugers meist eine Aufnahme zugeordnet, mit welcher die Halteplatte in Eingriff gebracht werden kann, wodurch wiederum die Positionierung des Staubsaugerfilterbeutels im Staubsauger erreicht wird. Über einen Anschlussstutzen wird die zu filternde Luft üblicherweise durch eine Durchgangsöffnung in der Halteplatte und in der Beutelwand in das Innere des Filterbeutels geleitet. Die Öffnungen in diesen Halteplatten sind häufig mittels einer Verschlussvorrichtung, beispielsweise in Form einer Verschlussklappe, verschließbar. Im Saugbetrieb befindet sich die Verschlussvorrichtung in einer Offenstellung, in der die Durchgangsöffnung der Halteplatte geöffnet ist. Beispielsweise wird die Verschlussvorrichtung durch Einschalten des Staubsaugers, d.h., den entstehenden Luftstrom geöffnet. Bei Beendigung des Saugbetriebs schließt sich die Verschlussvorrichtung.

So sind manuell betätigbare Verschlussvorrichtungen (DE 20 2013 001 096) und automatische Verschlussvorrichtungen (DE 10 2006 055 890, EP 0 758 209) sowie klappbare Verschlussteile (DE 10 2011 105 384) und Membranverschlussvorrichtungen (DE 20 2014 100 563 und FR 2 721 188) bekannt. Eine Verschlussvorrichtung mit einem Halteteil, an dem ein Verschlusselement in Form einer verschwenkbaren Verschlussklappe gelagert ist, ist aus der DE 10 2014 109 596 bekannt. Ein Halter mit zweiteiliger Ausgestaltung einer Haltevorrichtung aus Grundplatte und Verschlussvorrichtung ist aus der DE 20 2011 052 208 wie auch aus DE 20 2013 103 508 und DE 10 2010 060 353 bekannt.

Verschlussvorrichtungen des Stands der Technik können mithilfe vom Blattfedern (EP 2 123 206 und DE 296 15 163), bombierten Blattfedern (EP 1 137 360), Spiralfedern (DE 10 2012 012 999), Drahtfedern (DE 20 2013 100 862, DE 10 2008 046 200, DE 10 2006 037 456), schnurförmigen Elastomerelementen (DE 20 2008 004 733), quaderförmigen Elastomerelementen (EP 1 480 545 B1) oder Latex-Gummi (DE 1 628 582) in einen geschlossenen Zustand gebracht werden. Ein Federelement kann innerhalb des Staubsaugerfilterbeutels (DE 10 2011 008 117 und DE 20 2015 101 218) angeordnet sein. Gemäß der Lehre der EP 1 480 545 befindet sich das Federelement im geschlossenen Zustand der Verschlussklappe außerhalb des Beutels und im Betriebszustand innerhalb desselben.

Weiterhin ist es im Stand der Technik bekannt, Dichtungselemente zur Abdichtung zwischen Anschlussstutzen und Halteplatte vorzusehen. In der DE 102 03 460 wird beschrieben, wie ein Teil des Staubsaugerfilterbeutels selbst als Dichtung benutzt werden kann. Elastomerdichtungen im Inneren des Staubsaugerfilterbeutels werden in der DE 10 2010 060 353 und der DE 10 2007 062 028 beschrieben. Ein an der Halteplatte angebrachter Dichtring wird in der DE 10 2008 041 227 beschrieben, und eine Dichtmembran zwischen Staubsaugerfilterbeutel und Halteplatte wird in der EP 2 044 874 beschrieben.

Aus der WO 03/073903 A1 ist eine Vorrichtung für einen Staubsauerfilterbeutel mit einer haltevorrichtung und einem mit dieser integral ausgebildeten Verschlusselement in Form eines Silikonformteils bekannt.

Die im Stand der Technik bekannten Verschlussvorrichtungen weisen typischerweise Federn auf, mithilfe derer Durchgangsöffnungen in den Halteplatten bzw. den Verschlussvorrichtungen über Klappen verschlossen werden können. Die Justierung und Montage solcher Federn ist sehr aufwendig und fehleranfällig.

### Beschreibung der Erfindung

Angesichts des Stands der Technik besteht Bedarf für eine preiswerte und funktionssichere Vorrichtung mit einer Haltevorrichtung und einer Verschlussvorrichtung für einen Staubsaugerfilterbeutel, die einfach herzustellen ist. Hierfür stellt die Erfindung eine Vorrichtung für einen Staubsaugerfilterbeutel gemäß Anspruch 1 bereit. Diese Vorrichtung für einen Staubsaugerfilterbeutel umfasst eine Haltevorrichtung mit einer Durchgangsöffnung und eine von der Haltevorrichtung separat ausgebildete Verschlussvorrichtung zum Öffnen und Verschließen der Durchgangsöffnung der Haltevorrichtung. Die Verschlussvorrichtung umfasst eine Verschlussklappe und ein elastisches Element aus einem vernetzten Silikonelastomer. Das elastische Element ist in einem Zustand, in dem die Verschlussklappe die Durchgangsöffnung der Haltevorrichtung verschließt, vorgespannt.

Mithilfe der Haltevorrichtung kann der Staubsaugerfilterbeutels in einem Filterbeutelaufnahmeraum eines Staubsaugers positioniert werden, indem die Haltevorrichtung mit einer entsprechenden Aufnahme des Filterbeutelaufnahmeraums in Eingriff gebracht wird. Insbesondere kann die Haltevorrichtung als Halteplatte ausgebildet sein. Erfindungsgemäß ist die Haltevorrichtung separat von der Verschlussvorrichtung ausgebildet.

Erfindungsgemäß umfasst die Verschlussvorrichtung ein elastisches Element aus einem vernetzten Silikonelastomer. Die Dicke des elastischen Elements kann mehr als 0,5 mm, insbesondere mehr als 1 oder 2 mm betragen, um einer hinreichende Stabilität und/oder Rückstellkraft zu gewährleisten. Dieses elastische Element aus dem vernetzten Silikonelastomer ist in einem Zustand, in dem die Verschlussklappe die Durchgangsöffnung verschließt, vorgespannt. Das elastische Element stellt also eine Rückstellkraft bereit und ermöglicht eine Klappbewegung der Verschlussklappe. Ein Öffnen der Verschlussklappe erfolgt entgegen der elastischen Vorspannung. Somit ist keine zusätzliche Feder, wie im Stand der Technik, erforderlich, wodurch die Herstellung der Verschlussvorrichtung signifikant erleichtert wird.

Die Verschlussvorrichtung kann eine Grundplatte beziehungsweise ein Basisteil umfassen, wobei die Grundplatte beziehungsweise das Basisteil eine weitere Durchgangsöffnung fluchtend mit der Durchgangsöffnung der Haltevorrichtung aufweist. Die Verschlussklappe der Verschlussvorrichtung dient dann neben dem Verschließen der Durchgangsöffnung der Haltevorrichtung auch dem Verschließen der weiteren Durchgangsöffnung. Die weitere Durchgangsöffnung und die Verschlussklappe können (wie auch die Durchgangsöffnung der Haltevorrichtung) rund, insbesondere kreisförmig, ausgebildet sein. Die Haltevorrichtung kann aus Polypropylen, Polyethylen, Polyvinylchlorid, Polykarbonat, und/oder Polyethylentherephthelat bestehen oder zumindest eines dieser Materialien umfassen. Die Verschlussklappe und das Basisteil können ausschließlich über das elastische Element mit dem vernetzten Silikonelastomer miteinander verbunden sein. Das elastische Element kann fest mit der Verschlussklappe und dem Basisteil verbunden sein und kann ein Gelenk zwischen der Verschlussklappe und dem Basisteil bereitstellen. Das elastische Element kann beispielsweise streifenförmig ausgebildet sein.

Gemäß einer anderen Weiterbildung kann die Verschlussklappe ausschließlich über das elastische Element aus dem vernetzten Silikonelastomer mit der Haltevorrichtung verbunden sein.

Im Gegensatz zum Stand der Technik ist jeweils kein zusätzliches Federelement oder Scharnier (beispielsweise Filmscharnier) nötig. Sowohl eine Scharnierfunktion als auch eine Rückstellkraft können allein durch das elastische Element aus dem vernetzten Silikonelastomer bereitgestellt werden.

Die Haltevorrichtung kann durch Tiefziehen, beispielsweise durch Tiefziehen und Stanzen aus einer Folie, hergestellt werden. Alternativ wird die Halteplatte als einfache Spritzgussplatte hergestellt. Die Haltevorrichtung kann in Form einer Halteplatte ausgebildet sein oder eine solche umfassen. Das Tiefziehverfahren ist signifikant kostengünstiger als das im Stand der Technik zur Herstellung von Halteplatten verwendete Spritzgießverfahren. Die Haltevorrichtung muss für jeweilige Filterbeutelaufnahmeräume beziehungsweise die Aufnahmen in denselben, mit denen die Haltevorrichtung in Eingriff zu bringen ist, individuell angepasst werden. Durch das erfindungsgemäß vorgesehene Tiefziehen der Haltevorrichtung lassen sich somit im Gegensatz zum Stand der Technik auch für relativ geringe Stückzahlen eine Haltevorrichtung und somit Staubsaugerfilterbeutel mit der beanspruchten Vorrichtung wirtschaftlich herstellen. Ilnsbesondere lassen sich tiefgezogene Haltevorrichtungen auch relativ leicht und verlässlich mit Vlies(stoff)materialien, aus denen Staubsaugerfilterbeutel hergestellt sein können, beispielsweise durch Ultraschallschweißen, verbinden. Die Verschlussvorrichtungen hingegen müssen nicht individuell auf Filterbeutelaufnahmeräume abgestimmt sein und können mit verschiedenen individuell abgestimmten Haltevorrichtungen zusammenwirken und sie werden also im Allgemeinen in großen Stückzahlen gefertigt, sodass das auch ein relativ teures Spritzgussverfahren zur Herstellung der Verschlussvorrichtung wirtschaftlich akzeptabel ist. Hierbei ist zu beachten, dass spritzgegossene Verschlussvorrichtungen sehr zuverlässig hinsichtlich der Schließeigenschaften sind. Vorteilhaft ist in jedem Fall, dass die aufwendige Verschlussvorrichtung universell verwendet werden kann.

Gemäß einer Weiterbildung besteht die gesamte Verschlussvorrichtung (einstückig) aus dem vernetzten Silikonelastomer, wobei die Verschlussvorrichtung ein Basisteil (beispielsweise zur Befestigung an einem Staubsaugerfilterbeutel oder unter der Haltevorrichtung) umfassen kann. Das Basisteil und die Verschlussklappe können derart über das elastische Element aus dem vernetzten Silikonelastomer miteinander verbunden sein, dass sie ohne Vorspannung des elastischen Elements (im nicht-montierten Zustand der Verschlussvorrichtung) einen Winkel, beispielsweise einen Winkel zwischen 30 und 60 Grad, bilden. Die Verschlussklappe und das elastische Element (und gegebenenfalls das Basisteil) können hierbei in einem einzigen Spritzprozess oder in einem Extrusionsprozess zusammen hergestellt werden. Die Verschlussvorrichtung kann auch so ausgebildet sein, dass sie ein Basisteil und ein elastisches Element aus einem vernetzten Silikonelastomer und eine Verschlussklappe aus einem anderen Material, beispielsweise einem thermoplastischen Kunststoff, umfasst oder derart, dass sie eine Verschlussklappe und ein elastisches Element aus einem vernetzten Silikonelastomer und ein Basisteil aus einem anderen Material, beispielsweise einem thermoplastischen Kunststoff, umfasst.

Gemäß einer alternativen Weiterbildung besteht nicht die gesamte Verschlussvorrichtung aus dem vernetzten Silikonelastomer. Sie umfasst das elastische Element aus dem vernetzten Silikonelastomer. Weiterhin umfasst sie eine Verschlussklappe und ein Basisteil aus einem anderen Material, beispielsweise aus einem thermoplastischen Kunststoff. Wiederum kann die Verschlussklappe über das elastische Element aus dem vernetzten Silikonelastomer, ohne Vorspannung des elastischen Elements (im nicht-montierten Zustand der Verschlussvorrichtung) in einem Winkel, beispielsweise in einem Winkel zwischen 30 und 60 Grad, mit dem Basisteil der Verschlussvorrichtung, das ebenfalls aus einem thermoplastischen Kunststoff hergestellt sein kann, verbunden sein. Hierbei kann das elastische Element an das Basisteil und/oder die Verschlussklappe angespritzt werden.

In sämtlichen Weiterbildungen kann das elastische Element aus dem vernetzten Silikonelastomer im nicht-vorgespannten Zustand einen Knick aufweisen. Die genannte Vorspannung kann durch diesen Knick vermittelt werden. Das elastische Element kann im nicht-vorgespannten Zustand zwei Abschnitte aufweisen, die einen Winkel bilden.

Die Verschlussvorrichtung kann unterhalb der Haltevorrichtung (auf einer einer Beutelwand eines Staubsaugerbeutels, an dem die Haltevorrichtung angebracht wird, zugewandten Seite; im Betrieb eines Staubsaugers mit einem Staubsaugerbeutel mit der Vorrichtung ist "unterhalb" in Luftströmungsrichtung weiter entfernt als "oberhalb") angeordnet sein. Alternativ kann die Verschlussvorrichtung oberhalb der Haltevorrichtung (auf einer einer Beutelwand eines Staubsaugerbeutels an dem die Haltevorrichtung angebracht wird, abgewandten Seite) angeordnet sein. Die Haltevorrichtung kann ein Dichtungselement umfassen, das zumindest teilweise entlang des Umfangs der Durchgangsöffnung der Haltevorrichtung vorgesehen ist. Allgemein kann ein Dichtungselement, beispielsweise eine Dichtlippe, zur Abdichtung eines Anschlussstutzens eines Staubsaugers mit der weiteren Durchgangsöffnung der Verschlussvorrichtung beziehungsweise der Durchgangsöffnung der Haltevorrichtung umfasst sein. Das Dichtungselement kann aus einem thermoplastischen Elastomer bestehen oder dieses umfassen. Alternativ kann das Dichtungselement aus einem vernetztem Silikonelastomer bestehen oder ein solches umfassen.

Es wird weiterhin ein Staubsaugerfilterbeutel mit einer Vorrichtung gemäß einem der oben beschriebenen Beispiele bereitgestellt. Hierbei kann die Verschlussvorrichtung im Inneren des Staubsaugerfilterbeutels oder zwischen dem Staubsaugerfilterbeutel und der Haltevorrichtung vorgesehen sein. Die Verschlussvorrichtung ist unmittelbar mit einer Beutelwand des Staubsaugerfilterbeutels verbunden und wird so montiert, dass das elastische Element vorgespannt ist und die Durchgangsöffnung der Haltevorrichtung verschließt. Wenn der Staubsaugerfilterbeutel mit der Vorrichtung aufgrund des erreichten Füllgrads ausgewechselt werden soll, wird ein Anschlussstutzen des Staubsaugers aus der Durchgangsöffnung entfernt, und die Verschlussvorrichtung verschließt durch das elastische Element aus dem vernetzten Silikonelastomer die Durchgangsöffnung.

Der Staubsaugerfilterbeutel kann insbesondere in Form eines Flachbeutels oder Blockbodenbeutels ausgebildet sein. Der Staubsaugerfilterbeutel kann eine Beutelwandung mit einer oder mehreren Lagen aus Vlies und/oder Vliesstoff umfassen.

Gemäß einer Weiterbildung umfasst der Staubsaugerfilterbeutel ein daran angebrachtes Dichtungselement zur Abdichtung eines Anschlussstutzens eines Staubsaugers mit der Durchgangsöffnung der Haltevorrichtung beziehungsweise der weiteren Durchgangsöffnung der Verschlussvorrichtung.

Die Befestigung der Verschlussvorrichtung der erfindungsgemäßen Vorrichtung in den oben beschriebenen Weiterbildungen an der Beutelwand eines Staubsaugerbeutels oder der Haltevorrichtung kann mithilfe von Ultraschallweißen erfolgen. Um die Befestigung zu erleichtern, können Hinterschnitte in der Verschlussvorrichtung vorgesehen sein, in die durch das Ultraschallweißen geschmolzenes Material des Staubsaugerbeutels (Vliesstofffasermaterial) bzw. der Haltevorrichtung fließen kann. Die Hinterschnitte sind sich zur Oberfläche (des vernetzten Silikonelastomers) verjüngende nutenförmige Vertiefungen. Sie können im Zuge eines Strangextrudierens der Verschlussvorrichtung ausgebildet werden. Insbesondere können die Hinterschnitte in dem oben genannten aus dem vernetzten Silikonelastomer hergestellten Basisteil der Verschlussvorrichtung und/oder dem elastischen Element derselben vorgesehen sein.

Weitere Eigenschaften und Vorteile der Erfindung ergeben sich aus der ausführlichen aber nicht einschränkenden Beschreibung von Ausführungsformen, die mithilfe der beigefügten Zeichnungen dargestellt sind. Es versteht sich, dass einige oder sämtliche der im Weiteren beschriebenen Merkmale auch auf andere Weise miteinander kombiniert werden können.

Es zeigen:
- Figur 1a: eine Vorrichtung mit einer auf einem Staubsaugerfilterbeutel angebrachten Haltevorrichtung und einer in dem Staubsaugerfilterbeutel angebrachten Verschlussvorrichtung;
- Figur 1b: die in Figur 1 a gezeigte Verschlussvorrichtung im nicht-montierten Zustand;
- Figur 2: eine Vorrichtung mit einer auf einem Staubsaugerfilterbeutel angebrachten Haltevorrichtung und einer zwischen der Haltevorrichtung und einer Beutelwand des Staubsaugerfilterbeutels angebrachten Verschlussvorrichtung;
- Figur 3: Beispiele für einen Bestandteil einer Verschlussvorrichtung mit Hinterschnitten.

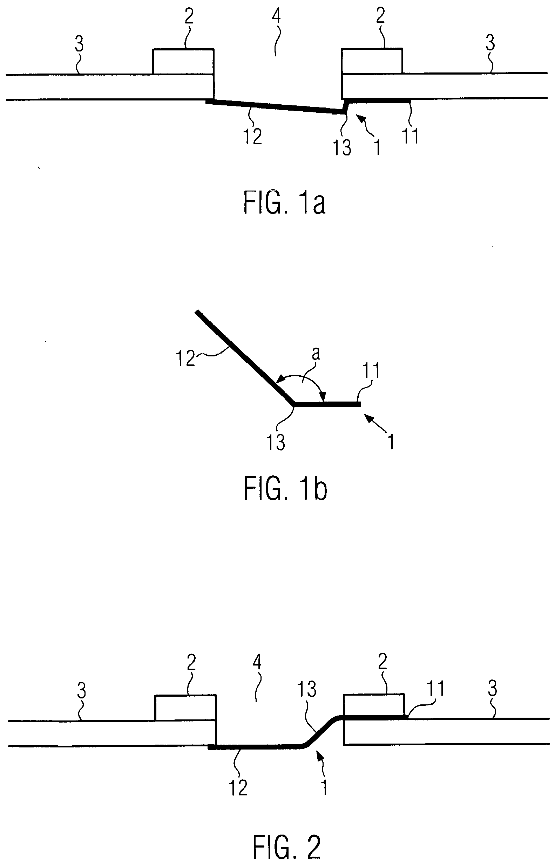

Figur 1a zeigt eine erfindungsgemäße Vorrichtung mit einer Verschlussvorrichtung 1 und einer Haltevorrichtung (Halteplatte) 2. Die Verschlussvorrichtung 1 ist innerhalb eines Staubsaugerfilterbeutels auf der Innenseite einer Beutelwand 3 des Staubsaugerfilterbeutels befestigt. Die Haltevorrichtung 2 ist außerhalb des Staubsaugerfilterbeutels auf der Außenseite der Beutelwand 3 befestigt und weist eine Durchgangsöffnung 4 auf. Figur 1b zeigt die Verschlussvorrichtung 1 von Figur 1a in einem nicht-montierten Zustand. Die Verschlussvorrichtung 1 umfasst ein Basisteil 11, eine Verschlussklappe 12 und ein elastisches Element 13 aus einem vernetzten Silikonelastomer über das die Verschlussklappe 12 an dem Basisteil 11 mit dem Winkel a (im nicht-montierten Zustand) angelenkt ist.

Die Verschlussvorrichtung 1 wird so montiert, dass durch die Spannung des elastischen Elements 13 aus dem vernetzten Silikonelastomer die Verschlussklappe 12 die Durchgangsöffnung 4 und eine entsprechende Öffnung in der Beutelwand 3 schließt. Durch Einführen eines Anschlussstutzens eines Staubsaugers durch die Durchgangsöffnung 4 kann die Verschlussklappe 12 der Verschlussvorrichtung 1 geöffnet werden, d.h. in Richtung des Inneren des Staubsaugerfilterbeutels bewegt werden. Wenn der Staubsaugerfilterbeutel aufgrund des erreichten Füllgrads ausgewechselt werden soll, wird der Anschlussstutzen des Staubsaugers aus der Durchgangsöffnung entfernt, und aufgrund der Wirkung des elastischen Elements 13 der Verschlussvorrichtung 1, schließt sich die Verschlussklappe 12, sodass bei der Entnahme des Staubsaugerfilterbeutels aus einem Filterbeutelaufnahmeraum des Staubsaugers kein Staub aus dem gefüllten Staubsaugerfilterbeutel austreten kann.

Während in der in Figur 1a gezeigten Ausführungsform die Verschlussvorrichtung 1 im Inneren des Staubsaugerfilterbeutels angeordnet ist, kann sie in einer alternativen Ausführungsform, wie in Figur 2 gezeigt zumindest teilweise zwischen der Haltevorrichtung 2 und der Beutelwand 3 angeordnet sein.

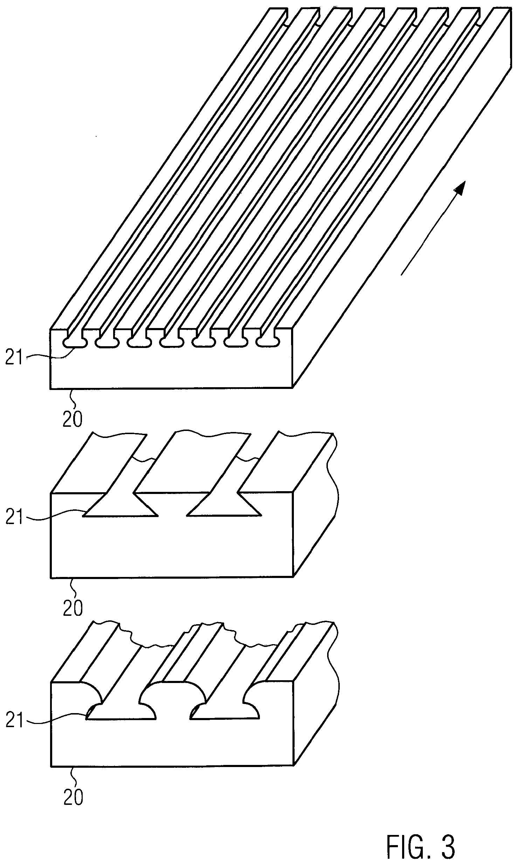

Die Befestigung der Verschlussvorrichtung 1 im Inneren des Staubsaugerfilterbeutels oder an der Haltevorrichtung 2 kann durch Ultraschallschweißen erfolgen. Hierzu kann es zweckdienlich sein, das vernetzte Silikonelastomer mit Hinterschnitten zu versehen, wie es in Figur 3 gezeigt ist. Figur 3 zeigt drei Beispiele für einen extrudierten Bestandteil 20 einer Verschlussvorrichtung, beispielsweise der Verschlussvorrichtung 1 aus Figur 1a, 1b und 2, aus vernetztem Silikonelastomer mit Hinterschnitten 21 mit verschiedenen gemometrischen Formen. Diese Hinterschnitte 21 können im Verlauf des Extrusionsvorgangs ausgebildet werden (der Pfeil in Figur 3 zeigt die Extrusionsrrichtung an). Wenn der Bestandteil 20 der Verschlussvorrichtung durch Ultraschallschweißen an eine Beutelwand eines Staubsaugerfilterbeutels oder an eine Haltevorrichtung befestigt wird, schmilzt Material der Beutelwand oder der Haltevorrichtung und kann zur sicheren Befestigung in die Hinterschnitte 21 fließen. Der Bestandteil 20 kann insbesondere Teil des elastischen Elements 13 sein, wie es beispielsweise in Figur 1a 1b oder 2 illustriert ist.

Es versteht sich, dass in den zuvor beschriebenen Ausführungsbeispielen genannte Merkmale nicht auf diese speziellen Kombinationen beschränkt und auch in beliebigen anderen Kombinationen möglich sind. Weiterhin versteht es sich, dass in den Figuren der gezeigte Staubsaugerfilterbeutel und die Haltevorrichtung sowie Verschlussvorrichtung zur Veranschaulichung nicht maßstabsgetreu wiedergegeben sind. Außerdem sind auch die Geometrien bzw. Formen der gezeigten Elemente nicht auf die gezeigten Beispiele beschränkt.

## Patentansprüche

1. Vorrichtung für einen Staubsaugerfilterbeutel, mit
einer Haltevorrichtung (2) mit einer Durchgangsöffnung (4); und
einer von der Haltevorrichtung (2) separat ausgebildete Verschlussvorrichtung (1) zum Verschließen der Durchgangsöffnung (4) der Haltevorrichtung (2);
wobei die Verschlussvorrichtung (1) eine Verschlussklappe (12) und ein elastisches Element (13) aus einem vernetzten Silikonelastomer umfasst und wobei das elastische Element (13) in einem Zustand, in dem die Verschlussklappe (12) die Durchgangsöffnung (4) der Haltevorrichtung (2) verschließt, vorgespannt ist.

2. Vorrichtung gemäß Anspruch 1, wobei die Verschlussvorrichtung (1) aus dem vemetzten Silikonelastomer besteht.

3. Vorrichtung gemäß Anspruch 1, wobei die Verschlussklappe (12) aus einem thermoplastischen Kunststoff besteht.

4. Vorrichtung gemäß Anspruch 2, wobei die Verschlussvorrichtung (1) einstückig aus der Verschlussklappe (12), dem elastischen Element (13) aus dem vernetzten Silikonelastomer und einem Basisteil (11) gebildet wird, wobei die Verschlussklappe (12) über das elastische Element (13) aus dem vernetzten Silikonelastomer an dem Basisteil (11) angelenkt ist.

5. Vorrichtung gemäß einem der vorhergehenden Ansprüche, wobei die Verschlussvorrichtung (1) aus der Verschlussklappe (12), dem elastischen Element (13) aus dem vernetzten Silikonelastomer und einem Basisteil (11) gebildet wird und die Verschlussklappe (12) und das Basisteil (11) ausschließlich über das elastische Element (13) miteinander verbunden sind.

6. Vorrichtung gemäß einem der Ansprüche 1 bis 4, wobei die Verschlussklappe (12) ausschließlich über das elastische Element (13) aus dem vernetzten Silikonelastomer mit der Haltevorrichtung (2) verbunden ist.

7. Vorrichtung gemäß einem der vorhergehenden Ansprüche, wobei die Haltevorrichtung (2) eine spritzgegossene oder eine tiefgezogene Haltevorrichtung (2) ist.

8. Vorrichtung gemäß einem der vorhergehenden Ansprüche, wobei die Verschlussvorrichtung (1) unterhalb oder oberhalb der Haltevorrichtung (2) angeordnet ist.

9. Vorrichtung nach einem der vorhergehenden Ansprüche, wobei die Haltevorrichtung (2) ein Dichtungselement zur Abdichtung eines Anschlussstutzens eines Staubsaugers mit der Durchgangsöffnung (4) der Haltevorrichtung (2) umfasst, das zumindest teilweise entlang des Umfangs der Durchgangsöffnung (4) vorgesehen ist.

10. Vorrichtung gemäß einem der vorhergehenden Ansprüche, wobei die Haltevorrichtung (2) aus Polypropylen, Polyethylen, Polyvinylchlorid, Polykarbonat, und/oder Polyethylentherephthelat besteht oder dieses umfasst.

11. Vorrichtung gemäß einem der vorhergehenden Ansprüche, wobei die Verschlussvorrichtung (1) Hinterschnitte (21) aufweist.

12. Staubsaugerfilterbeutel mit einer Vorrichtung gemäß einem der vorhergehenden Ansprüche.

13. Staubsaugerfilterbeutel gemäß Anspruch 12, wobei die Verschlussvorrichtung (1) im Inneren des Staubsaugerfilterbeutels oder zwischen einer Beutelwand des Staubsaugerfilterbeutels und der Haltevorrichtung (2) vorgesehen ist.

## Claims

1. A device for a vacuum cleaner filter bag, comprising:
a holding device (2) with a through opening (4); and
a closing device (1) formed separately from the holding device (2) for closing the through opening (4) of the holding device (2);
wherein the closing device (1) comprises a closing flap (12) and an elastic element (13) made of a cross-linked silicone elastomer, and wherein the elastic element (13) is biased in a state in which the closing flap (12) closes the through opening (4) of the holding device (2).

2. The device according to claim 1, wherein the closing device (1) is made of the cross-linked silicone elastomer.

3. The device according to claim 1, wherein the closing flap (12) is made of a thermoplastic material.

4. The device according to claim 2, wherein the closing device (1) is integrally formed of the closing flap (12), the elastic element (13) made of the cross-linked silicone elastomer and a base member (11), the closing flap (12) being hinged to the base member (11) via the elastic element (13) made of the cross-linked silicone elastomer.

5. The device according to any one of the preceding claims, wherein the closing device (1) is formed by the closing flap (12), the elastic element (13) made of the cross-linked silicone elastomer and a base member (11), and the closing flap (12) and the base member (11) are connected to each other solely via the elastic element (13).

6. The device according to any one of claims 1 to 4, wherein the closing flap (12) is connected to the holding device (2) solely via the elastic element (13) made of the crosslinked silicone elastomer.

7. The device according to any one of the preceding claims, wherein the holding device (2) is an injection moulded or a thermoformed holding device (2).

8. The device according to any one of the preceding claims, wherein the locking device (1) is arranged below or above the holding device (2).

9. The device according to any one of the preceding claims, wherein the holding device (2) comprises a sealing member for sealing a connection piece of a vacuum cleaner with the through opening (4) of the holding device (2) which is provided at least partially along the circumference of the through opening (4).

10. The device according to any one of the preceding claims, wherein the holding device (2) is made of or comprises polypropylene, polyethylene, polyvinyl chloride, polycarbonate, and/or polyethylene-therephthalate.

11. The device according to any one of the preceding claims, wherein the closing device (1) has undercuts (21).

12. A vacuum cleaner filter bag comprising a device according to any one of the preceding claims.

13. The vacuum cleaner filter bag according to claim 12, wherein the closing device (1) is provided inside the vacuum cleaner filter bag or between a bag wall of the vacuum cleaner filter bag and the holding device (2).

## Revendications

1. Dispositif pour un sac filtrant d'aspirateur, avec
un dispositif de retenue (2) présentant une ouverture de passage (4) ; et
un dispositif de fermeture (1) réalisé séparément du dispositif de retenue (2) et permettant de fermer l'ouverture de passage (4) du dispositif de retenue (2) ;
dans lequel le dispositif de fermeture (1) comprend un volet de fermeture (12) et un élément élastique (13) en un élastomère de silicone réticulé, et dans lequel l'élément élastique (13) est précontraint dans un état au sein duquel le volet de fermeture (12) ferme l'ouverture de passage (4) du dispositif de retenue (2).

2. Dispositif selon la revendication 1, dans lequel le dispositif de fermeture (1) est constitué de l'élastomère de silicone réticulé.

3. Dispositif selon la revendication 1, dans lequel le volet de fermeture (12) est constitué d'un matériau thermoplastique.

4. Dispositif selon la revendication 2, dans lequel le dispositif de fermeture (1) est formé d'un seul tenant par le volet de fermeture (12), l'élément élastique (13) en élastomère de silicone réticulé et une partie formant base (11), dans lequel le volet de fermeture (12) est articulé au niveau de la partie formant base (11) par l'intermédiaire de l'élément élastique (13) en élastomère de silicone réticulé.

5. Dispositif selon l'une quelconque des revendications précédentes, dans lequel le dispositif de fermeture (1) est formé par le volet de fermeture (12), l'élément élastique (13) en élastomère de silicone réticulé et une partie formant base (11), et le volet de fermeture (12) et la partie formant base (11) sont reliés l'un à l'autre exclusivement par l'intermédiaire de l'élément élastique (13).

6. Dispositif selon l'une quelconque des revendications 1 à 4, dans lequel le volet de fermeture (12) est relié au dispositif de retenue (2) exclusivement par l'intermédiaire de l'élément élastique (13) en élastomère de silicone réticulé.

7. Dispositif selon l'une quelconque des revendications précédentes, dans lequel le dispositif de retenue (2) est un dispositif de retenue (2) moulé par injection ou embouti.

8. Dispositif selon l'une quelconque des revendications précédentes, dans lequel le dispositif de fermeture (1) est agencé au-dessous ou au-dessus du dispositif de retenue (2).

9. Dispositif selon l'une quelconque des revendications précédentes, dans lequel le dispositif de retenue (2) comprend un élément d'étanchéité permettant de rendre étanche une pièce de raccordement d'un aspirateur par rapport à l'ouverture de passage (4) du dispositif de retenue (2) et prévu au moins partiellement le long de la périphérie de l'ouverture de passage (4).

10. Dispositif selon l'une quelconque des revendications précédentes, dans lequel le dispositif de retenue (2) est constitué de polypropylène, de polyéthylène, de poly (chlorure de vinyle), de polycarbonate et/ou de poly (téréphtalate d'éthylène) ou comprend ceux-ci.

11. Dispositif selon l'une quelconque des revendications précédentes, dans lequel le dispositif de fermeture (1) présente des contre-dépouilles (21).

12. Sac filtrant d'aspirateur comprenant un dispositif selon l'une quelconque des revendications précédentes.

13. Sac filtrant d'aspirateur selon la revendication 12, dans lequel le dispositif de fermeture (1) est prévu à l'intérieur du sac filtrant d'aspirateur ou entre une paroi de sac du sac filtrant d'aspirateur et le dispositif de retenue (2).
